# EUROPÄISCHE PATENTANMELDUNG

(11) **EP 4 818 066 A1**
(43) Veröffentlichungstag der Anmeldung: **07.10.2026**
(21) Anmeldenummer: 25168274.6
(22) Anmeldetag: 03.04.2025
(51) Int. Cl.: B65D 19/00, G01D 9/00

(54) **DATENLOGGER ZUR ANORDNUNG IN EINER FRACHTPALETTE UND FRACHTPALETTE UMFASSEND EINEN DATENLOGGER**

(71) Anmelder: REP IP AG, 6300 Zug (CH)
(72) Erfinder: ROS, Nico, 6300 Zug (CH); von BIEREN, Arndt, 6300 Zug (CH); FÄSSLER, Patrick, 6300 Zug (CH)
(74) Vertreter: SONN Patentanwälte GmbH & Co KG

(57) **Zusammenfassung**

Datenlogger (1) zum Einsetzen in eine Befestigungsschiene (2) einer Frachtpalette, aufweisend eine Mehrzahl von Komponenten, einschließlich wenigstens einer Batterie und wenigstens einer Elektronikeinheit, ein Gehäuse, das eine Mehrzahl von Aufnahmekapseln (3) und benachbarte Aufnahmekapseln (3) jeweils verbindende Verbindungsabschnitte (4) ausbildet, wobei in den Aufnahmekapseln (3) jeweils eine aus der Mehrzahl der Komponenten aufgenommen ist und wobei die Aufnahmekapseln (3) in Vertiefungen (12) der Befestigungsschiene (3) einsetzbar sind und die Verbindungsabschnitte (4) in Nutabschnitte (13) der Befestigungsschiene (2) passen, wobei das Gehäuse eine formstabile Schale (6) mit einer Mantelfläche und einer Bodenfläche aufweist und zumindest an der Mantelfläche wenigstens ein elastisches Element, insbesondere eine elastische Umhüllung (7), angebracht ist.

## Beschreibung

Die Erfindung betrifft einen Datenlogger zum Einsetzen in eine Befestigungsschiene einer Frachtpalette.

In der Logistik, insbesondere im Bereich der Luftfracht, werden Datenlogger eingesetzt, um transportrelevante Parameter wie geographische Position, Temperatur, Luftfeuchtigkeit und Erschütterungen während des Transports von Gütern zu überwachen. Diese Datenlogger werden typischerweise an Frachtpaletten, insbesondere an sogenannten ULD (Unit Load Device) Paletten, angebracht, um Informationen über den Transportverlauf zu erfassen und zu speichern.

Es ist in der KR 1020100127385 A und der WO 2009/001989 A1 bereits vorgeschlagen worden, Datenlogger in Befestigungsschienen (edge rails) von ULD-Paletten einzulegen, wobei diese Befestigungsschienen typischerweise langgestreckte Profilelemente mit einer durchgehenden Nut sind, entlang derer eine Reihe von Vertiefungen mit erweitertem Durchmesser angeordnet sind. Die Nut zwischen benachbarten Vertiefungen bildet jeweils einen Nutabschnitt aus.

Diese Befestigungsschienen dienen primär dem Zweck, Sicherungsmittel wie Netze oder Zurrgurte zu befestigen, mit denen die auf der Palette geladene Fracht gesichert wird, um ein Verrutschen oder Herunterfallen während des Transports zu verhindern. Die Befestigungsschienen umfassen daher Befestigungspunkte mit Vertiefungen, an denen diese Sicherungsmittel eingehakt oder anderweitig befestigt werden können.

Für das Einlegen in die Randschiene geeignete Datenlogger bestehen aus einer Mehrzahl von Aufnahmekapseln zur Aufnahme von Komponenten und Batterien, die durch Verbindungsabschnitte miteinander verbunden sind. Die Aufnahmekapseln sind in die Vertiefungen der Befestigungsschiene einsetzbar, während die Verbindungsabschnitte in die Nutabschnitte der Befestigungsschiene passen.

Bei den bekannten Datenloggern treten jedoch verschiedene Probleme auf. Da ULDs in der Logistik eingesetzt werden, sind die Befestigungsschienen und damit die darin eingesetzten Datenlogger hohen mechanischen Belastungen und Umwelteinflüssen ausgesetzt. Beispielsweise können Staplerzinken oder Staplerrollen sowie Verformungen der ULD zu Beschädigungen führen. Zusätzlich wirken Feuchtigkeitseinflüsse, Temperatur- und Druckunterschiede sowie UV-Strahlung durch Sonnenlicht auf die Datenlogger ein.

Um die elektronischen Komponenten vor diesen Einflüssen zu schützen, ist eine robuste Schutzhülle erforderlich. Der verfügbare Platz in den Befestigungsschienen ist jedoch begrenzt. Durch den Platzbedarf für eine herkömmliche Logger-Umhüllung steht weniger Raum für die Elektronik und Batterien zur Verfügung, was die Leistungsfähigkeit des Datenloggers einschränkt.

Herkömmliche Kunststoff-Umhüllungen, die mittels Tiefzieh- oder Spritzgussverfahren hergestellt werden, bestehen typischerweise aus einer Schale, in die Elektronik und Batterien eingebracht werden, sowie einem Deckel. Zur Verbindung von Schale und Deckel wird eine Überlappung benötigt, die weiteren Platz für die elektronischen Komponenten und Batterien wegnimmt.

Zudem ist die Befestigung der bekannten Datenlogger in den Schienen je nach Befestigungskonzept aufwendig und erfordert häufig Hilfsmittel, wie z.B. Klebstoff, oder Werkzeuge. Dabei können Beschädigungen der Umhüllung während des Befestigungsprozesses auftreten. Im Logistikalltag können sich die Datenlogger bei unzureichender Befestigung leicht lösen, beispielsweise durch mechanische Einwirkungen, oder werden versehentlich herausgenommen.

Ein weiteres Problem besteht darin, dass beim Befestigungsprozess die Aktivierung der Datenlogger vergessen werden kann, insbesondere bei ungeschultem Personal. Nach dem Einbau ist zudem der Status der Datenlogger oft nicht mehr manuell überprüfbar.

Darüber hinaus werden Funksignale durch die umgebende Metall-Palette gestört und können nicht in alle Richtungen weitergegeben werden. Bei Beschädigung einer Batterie kann, je nach elektronischer Schaltung, der gesamte Datenlogger ausfallen.

Der Erfindung liegt daher die Aufgabe zugrunde, einen verbesserten Datenlogger bereitzustellen, der eine stabile Umhüllung aufweist, die vor mechanischen Belastungen und Umwelteinflüssen schützt, dabei jedoch nur wenig Platz benötigt, so dass ausreichend Raum für Elektronik und Batterien zur Verfügung steht. Eine weitere Aufgabe der Erfindung besteht darin, ein Befestigungskonzept zu schaffen, das ein schnelles und einfaches Einbringen des Datenloggers in die Befestigungsschiene ermöglicht, gleichzeitig aber einen sicheren Halt gewährleistet, so dass der Datenlogger nicht unbeabsichtigt herausfallen oder ohne Weiteres entfernt werden kann.

Zur Lösung dieser Aufgabe sieht die Erfindung einen Datenlogger zum Einsetzen in eine Befestigungsschiene einer Frachtpalette vor, aufweisend:
- eine Mehrzahl von Komponenten, einschließlich wenigstens einer Batterie und wenigstens einer Elektronikeinheit,
- ein Gehäuse, das
- eine Mehrzahl von Aufnahmekapseln und benachbarte Aufnahmekapseln jeweils verbindende Verbindungsabschnitte ausbildet,

wobei in den Aufnahmekapseln jeweils eine aus der Mehrzahl der Komponenten aufgenommen ist und
wobei die Aufnahmekapseln in die Vertiefungen der Befestigungsschiene einsetzbar sind und die Verbindungsabschnitte in die Nutabschnitte der Befestigungsschiene passen,
wobei das Gehäuse eine formstabile Schale mit einer Mantelfläche und einer Bodenfläche aufweist und zumindest an der Mantelfläche wenigstens ein elastisches Element, insbesondere eine elastische Umhüllung, angebracht ist.

Diese Ausführung aus zwei Materialien, nämlich einer Hartkomponenten und einer Weichkomponente, löst in vorteilhafter Weise mehrere technische Probleme gleichzeitig. Die formstabile Schale sorgt für die erforderliche mechanische Stabilität zum Schutz der empfindlichen elektronischen Komponenten, während das wenigstens eine elastische Element, wie z.B. die elastische Umhüllung, effektiv vor Umwelteinflüssen wie Erschütterungen, Feuchtigkeit, UV-Strahlung sowie Temperatur- und Druckschwankungen schützt.

Durch das wenigstens eine elastische Element wird beim Einsetzen des Datenloggers in die Randschiene ein reibschlüssiger und ggf. formschlüssiger Sitz erreicht, der ein unbeabsichtigtes Lösen des Loggers verhindert, ohne dass zusätzliche Befestigungsmittel oder Werkzeuge erforderlich sind. Die elastische Komponente verformt sich beim Einsetzen und bildet vorzugsweise einen Hinterschnitt aus, der das versehentliche Entfernen des Loggers deutlich erschwert. Der Hinterschnitt wird vorzugsweise dadurch erreicht, dass das wenigstens eine elastische Element, insbesondere die elastische Umhüllung, einen Wulst ausbildet, der einen Formschluss in der Nut der Befestigungsschiene bewirkt. Gleichzeitig ermöglicht diese Konstruktion eine einfache und schnelle Installation durch bloßes Eindrücken, was angesichts der hohen Stückzahlen in der Logistikbranche einen erheblichen wirtschaftlichen Vorteil darstellt.

Ein weiterer technischer Vorteil besteht in der platzsparenden Konstruktion. Da ein elastisches Element, z.B. als umhüllende Schicht, aus der Weichkomponente vorgesehen ist, kann auf zusätzliche Verbindungselemente zwischen Schale und Abdeckung, wie sie bei herkömmlichen Gehäusen mit Klick- oder Schnappverbindungen erforderlich wären, verzichtet werden. Dadurch steht mehr Raum für die Elektronik und Batterien zur Verfügung, was wiederum eine leistungsfähigere Ausgestaltung des Datenloggers bei gleichzeitig kompakter Bauweise ermöglicht.

Die Erfindung sorgt zudem für einen verbesserten Schutz der verbauten Elektronik gegen die in der Logistik auftretenden mechanischen Belastungen durch Staplerzinken, Staplerrollen oder Verformungen der ULD-Palette. Das wenigstens eine elastische Element, z.B. in Form eines elastischen Überzugs, wirkt dabei als zusätzlicher Stoßdämpfer, der Erschütterungen absorbiert und so die Lebensdauer des Loggers verlängert.

Bevorzugt ist vorgesehen, dass das Gehäuse lediglich eine einzige formstabile Schale aufweist oder aus zwei Schalenhälften zusammengesetzt ist.

Wenn das Gehäuse lediglich eine einzige formstabile Schale aufweist, welche alle Aufnahmekapseln samt den dazwischenliegenden Verbindungsabschnitten des Datenloggers ausbildet, kann bevorzugt vorgesehen sein, dass die formstabile Schale auf einer Seite offen ausgebildet ist, wobei diese offene Seite (nach Bestückung der Aufnahmekapseln) durch die elastische Umhüllung verschlossen wird. Dies vereinfacht die Herstellung der formstabilen Schale erheblich, da diese beispielsweise in einem einfachen Spritzgussverfahren gefertigt werden kann. Die elastische Umhüllung übernimmt hierbei nicht nur die Funktion eines Deckels, sondern gewährleistet gleichzeitig eine zuverlässige Abdichtung gegen Umwelteinflüsse. Die offene Seite kann dabei entweder auf der Oberseite oder der Unterseite der formstabilen Schale angeordnet sein, je nach gewünschter Zugänglichkeit und Einbaurichtung des Datenloggers. Diese Konstruktion vermeidet zudem die Notwendigkeit zusätzlicher Verbindungselemente oder Schnappverbindungen zwischen Schale und Deckel und trägt somit zu einer weiteren Platzeinsparung bei, die für die Integration zusätzlicher Funktionalitäten genutzt werden kann.

In einer alternativen bevorzugten Ausführungsform ist die formstabile Schale zweiteilig ausgeführt und besteht insbesondere aus zwei Schalenhälften. Die Teilungsebene zwischen den beiden Schalenelemente, insbesondere Schalenhälften, kann hierbei je nach fertigungstechnischen Erfordernissen entweder horizontal oder vertikal angeordnet sein. Bei einer horizontalen Teilungsebene wird die Schale in ein oberes und ein unteres Schalenelement unterteilt. Bei einer vertikalen Teilungsebene hingegen wird die Schale in ein linkes und ein rechtes Schalenelement geteilt. Die beiden Schalenelemente, insbesondere Schalenhälften, können vor dem Umspritzen mit der elastischen Umhüllung mittels geeigneter Verbindungstechniken wie Ultraschallschweißen, Kleben oder Schnappverbindungen miteinander verbunden werden. Die anschließend aufgebrachte elastische Umhüllung dient dann vorzugsweise nicht nur als Schutz und Befestigungselement, sondern auch als zusätzliche Sicherung der Verbindung zwischen den Schalenhälften und sorgt für eine zuverlässige Abdichtung der Teilungsfuge.

Es ist somit ersichtlich, dass das wenigstens eine elastische Element, wie z.B. die elastische Umhüllung, bevorzugt eine Stoß- oder Trennfläche zwischen zwei Schalenelementen der formstabilen Schale und/oder oder eine offene Seite der formstabilen Schale überdeckt. Die elastische Komponente fungiert hierbei als platzsparendes Abdichtungs- und Verschlusselement, sodass mehr Raum für die Elektronik und Batterien zur Verfügung steht und eine leistungsfähigere Ausgestaltung des Datenloggers bei gleichzeitig kompakter Bauweise realisiert werden kann.

Der erfindungsgemäße Datenlogger kann verschiedene Komponenten aufweisen, die in den Aufnahmekapseln des Gehäuses angeordnet sind. Zu diesen Komponenten gehören insbesondere eine oder mehrere Batterien, die vorzugsweise so geschaltet sind, dass der Logger auch bei Ausfall einer Batterie weiterhin funktionsfähig bleibt. Es können eine oder mehrere Elektronikeinheit(en) vorgesehen sein, die unterschiedliche Funktionen realisieren, wie beispielsweise ein Steuermodul zur zentralen Verarbeitung und Steuerung, ein Sensormodul zur Erfassung verschiedener physikalischer Parameter, ein Kommunikationsmodul zur Datenübertragung und dergleichen. Die Elektronikeinheiten können auf einer oder mehreren Platinen mit einem Mikroprozessor, Sensoren, Speicherkomponenten und einer Kommunikationsschnittstelle ausgeführt sein. Insbesondere kann der Datenlogger mit Sensoren zur Erfassung von Temperatur, der geografischen Position, Luftfeuchtigkeit, Druck, Beschleunigung und/oder Erschütterungen ausgestattet sein, um die Transportbedingungen der Frachtpalette kontinuierlich oder in bestimmten Zeitabständen zu überwachen. Des Weiteren kann der Datenlogger eine Funkeinheit wie beispielsweise ein RFID-, Bluetooth-, WLAN-, LoRa-, LoRaWAN- oder GSM-Modul aufweisen.

Die einzelnen Module wie Steuermodul, Sensormodul und Kommunikationsmodul sind als funktionelle Einheiten zu betrachten, die nicht notwendigerweise baulich getrennt ausgeführt sein müssen. Vielmehr können diese Module auch als Funktionseinheiten in einer oder mehreren verbundenen integrierten Elektronikeinheit realisiert sein.

In einer bevorzugten Ausführungsform weisen die Verbindungsabschnitte jeweils einen Verbindungskanal zum Verbinden benachbarter Aufnahmekapseln auf, wobei die Verbindungskanäle elektrische Verbindungsleitungen zwischen den Aufnahmekapseln aufnehmen. Die elektrischen Verbindungsleitungen können hierbei als durch den Verbindungskanal geführte Kabel ausgebildet sein oder als Leiterbahnen derjenigen Leiterplatte, auf welcher die wenigstens eine Elektronikeinheit angeordnet ist. Im letzteren Fall kann eine Leiterplatte sich über mehrere Aufnahmekapseln und Verbindungsabschnitte erstrecken und bevorzugt der Form der Schale folgen. Diese Gestaltung gewährleistet einen sicheren und geschützten Verlauf der elektrischen Verbindungsleitungen zwischen den in den Aufnahmekapseln angeordneten Komponenten. Die Leitungen werden durch die formstabile Schale vor mechanischen Einflüssen geschützt und durch die elastische Umhüllung zusätzlich gegen Umwelteinflüsse abgedichtet. Diese Leitungsführung vermeidet freiliegende oder lose Kabelverbindungen, die anfällig für Beschädigungen oder Kurzschlüsse wären.

In einer bevorzugten Ausführungsform weist das wenigstens eine elastische Element, wie z.B. die elastische Umhüllung, eine Shore-A Härte größer als 40 auf, während die formstabile Schale ein E-Modul größer als 3000 MPa besitzt. Die Shore-A Härte der elastischen Komponente von mehr als 40, vorzugsweise 40-80, gewährleistet einerseits ausreichende Flexibilität, um eine zuverlässige Abdichtung gegen Umwelteinflüsse zu erreichen und beim Einsetzen in die Befestigungsschiene die erforderliche Verformung für eine reibschlüssige Befestigung und/oder einen Hinterschnitt zu ermöglichen. Andererseits ist diese Härte hoch genug, um eine langfristige Formstabilität und Widerstandsfähigkeit gegen Abrieb im rauen Logistikalltag sicherzustellen. Bevorzugt besteht das wenigstens eine elastische Element, insbesondere die elastische Umhüllung, hierbei aus einem Elastomer oder thermoplastischen Elastomer (TPE).

Das E-Modul der formstabilen Schale von mehr als 3000 MPa sorgt für eine hohe Steifigkeit und Festigkeit, die den erheblichen mechanischen Belastungen, wie sie beim Transport und der Handhabung von Frachtpaletten auftreten, auch bei geringer Wandstärke standhält. Bevorzug ist hierbei vorgesehen, dass die formstabile Schale aus Polyamid oder einem faserverstärkten Kunststoff, wie z.B. einem glasfaserverstärkten Kunststoff, besteht. Die Wandstärke der formstabilen Schale beträgt vorzugsweise 0,5-2,0 mm.

Das wenigstens eine elastische Element, wie z.B. die elastische Umhüllung, ist zumindest an der Mantelfläche des Datenloggers vorgesehen, wodurch sichergestellt wird, dass die formstabile Schale nicht direkt mit der Randschiene in Kontakt kommt, um eine mechanische Entkoppelung zu erreichen. Dies führt zu einer effektiven Dämpfung von Stößen und Vibrationen und schützt somit die empfindlichen elektronischen Komponenten vor Beschädigungen. Das wenigstens eine elastische Element bzw. die elastische Umhüllung kann hierbei entweder die gesamte Mantelfläche bedecken oder nur stellenweise an der Mantelfläche angebracht sein. Bei einer stellenweisen Anbringung ist die Weichkomponente beispielsweise an der Mantelfläche der Verbindungsabschnitte angebracht, um dort im Bereich der Nutabschnitte in die Randschiene geklemmt zu werden. Eine derartige Anordnung des wenigstens einen elastischen Elements bzw. der elastischen Umhüllung an den Kontaktflächen zur Randschiene ermöglicht einen Kompromiss zwischen Materialeinsatz und Funktionalität, da die Weichkomponente genau dort angebracht wird, wo sie für die Befestigung und Schwingungsisolation besonders wichtig ist. Zugleich wird durch diese selektive Anwendung eine Materialeinsparung erzielt, ohne die Schutzfunktion und den sicheren Halt des Datenloggers zu beeinträchtigen. Vorzugsweise trägt jeder der Mehrzahl von Verbindungsabschnitten jeweils ein elastisches Element.

Bei Ausführungen, bei denen die Weichkomponente lediglich an der Mantelfläche der Verbindungsabschnitte angebracht ist, ist zwischen den Aufnahmekapseln und den entsprechenden Vertiefungen der Befestigungsschiene ein Spalt bzw. Freiraum vorgesehen, sodass die Aufnahmekapseln zumindest an ihrer Mantelfläche nicht mit der Randschiene in Berührung kommen.

Bevorzugt ist hierbei vorgesehen, dass die elastische Umhüllung auf den Verbindungsabschnitten in einer Schichtdicke von 0,2 - 2,0 mm aufgebracht ist.

In einer anderen bevorzugten Ausführung umhüllt die elastische Umhüllung die formstabile Schale vollständig. Dies bedeutet, dass das Gehäuse überall zweischichtig mit einer inneren Schicht aus der formstabilen Schale und einer äußeren Schicht aus der elastischen Umhüllung gebildet ist.

Die Herstellung des Gehäuses aus der Hartkomponente (formstabile Schale) und der Weichkomponente (elastisches Element bzw. Umhüllung) erfolgt vorzugsweise in einem mehrstufigen Verfahren. Die formstabile Schale kann mittels verschiedener Fertigungsverfahren hergestellt werden, beispielsweise durch Spritzguss oder Tiefziehen oder andere Kunststoffformgebungsverfahren, abhängig von den spezifischen Anforderungen und der gewünschten Geometrie. Vor dem Umspritzen mit der elastischen Umhüllung werden die Elektronikeinheiten und Batterien in die Aufnahmeräume der Aufnahmekapseln eingelegt und gegebenenfalls über die Verbindungskanäle elektrisch miteinander verbunden. Die bestückte Schale wird entweder an einer Seite, wie z.B. an der Oberseite, offen gelassen oder durch Aufsetzen eines weiteren Schalenelements verschlossen. In einem nachfolgenden Prozessschritt wird die bestückte Schale mit dem Material der elastischen Umhüllung umspritzt oder umgossen. Hierbei ist besonders auf die Prozessparameter wie Temperatur und Druck zu achten, um eine Beschädigung oder Verformung der bereits gefertigten formstabilen Schale sowie der eingebauten elektronischen Komponenten zu vermeiden. Alternativ kann auch ein Vakuumgussverfahren mit geringerer Temperatur und niedrigerem Druck für das Aufbringen der elastischen Umhüllung verwendet werden, insbesondere wenn es sich bei dem Material der elastischen Komponente um ein Elastomer oder thermoplastisches Elastomer (TPE) handelt. Es ist voreilhaft, auf gleichmäßige Wandstärken der formstabilen Schale zu achten, um Schwindungsunterschiede und dadurch entstehenden Verzug beim Abkühlen zu vermeiden. Der Vorteil dieser ZweiKomponenten-Konstruktion besteht in der festen Verbindung zwischen beiden Materialien, die ohne zusätzliche Klebstoffe oder mechanische Verbindungselemente auskommt und somit eine hohe Langzeitstabilität und Dichtigkeit des Gehäuses gewährleistet.

In einer besonders bevorzugten Ausführungsform weist die formstabile Schale in den Verbindungsabschnitten ein I-Träger-Profil auf. Diese spezielle Profilgeometrie verleiht dem Verbindungsabschnitt zwischen benachbarten Aufnahmekapseln eine erhöhte mechanische Stabilität und Biegesteifigkeit bei gleichzeitig minimiertem Materialeinsatz. Das I-Träger-Profil ist besonders vorteilhaft, da es durch seinen symmetrischen Aufbau mit zwei Flanschen und einem verbindenden Steg eine optimale Kraftverteilung gewährleistet und damit einer Verformung oder einem Bruch des Verbindungsabschnitts wirksam entgegenwirkt, selbst wenn der Datenlogger starken mechanischen Belastungen ausgesetzt ist. Ein weiterer Vorteil dieser Profilgeometrie besteht in der gleichmäßigen Wandstärke, die beim Spritzgussverfahren für die Herstellung der formstabilen Schale entscheidend ist, da hierdurch beim Abkühlen keine Schwindungsunterschiede und dadurch kein Verzug entstehen.

Bei einer Ausbildung der formstabilen Schale in den Verbindungsabschnitten als I-Träger-Profil fließt das Material der elastischen Komponente während des Umspritzprozesses in die Zwischenräume zwischen den Flanschen des I-Trägers und bildet dort hineinragende Zungen aus. Diese materialschlüssige Verzahnung zwischen der Hartkomponente und der Weichkomponente führt zu einer deutlich erhöhten Verbundfestigkeit der beiden Materialien.

Wie bereits erwähnt, kann die formstabile Schale auf einer Seite offen ausgebildet sein, wobei die elastische Umhüllung diese offene Seite vollständig verschließt und abdichtet. Die offene Seite kann im eingebauten Zustand entweder an der Unterseite, d.h. dem Boden der Randschienennut zugewandt, oder an der Oberseite angeordnet sein. Dies erlaubt eine flexible Anpassung an unterschiedliche Einbausituationen und Anforderungen hinsichtlich der Exposition gegenüber Umwelteinflüssen. Bei einer Anordnung der offenen Seite an der Unterseite wird der Verschlussbereich durch die elastische Umhüllung zusätzlich durch den Kontakt mit dem Boden der Nut geschützt. Bei einer Anordnung der offenen Seite an der Oberseite kann die elastische Umhüllung in diesem Bereich gezielt verstärkt ausgeführt sein oder von unten unterstützt werden, um eine erhöhte mechanische Beständigkeit zu erzielen.

In einer weiteren bevorzugten Ausführungsform umfasst der Datenlogger einen Aktivierungsknopf mit einem Lichtsignal zur Anzeige der Aktivierung des Datenloggers. Der Aktivierungsknopf ist vorzugsweise durch die elastische Umhüllung hindurch betätigbar, ohne dass die Dichtigkeit des Gehäuses beeinträchtigt wird. Nach dem Einbringen des Loggers in die Befestigungsschiene kann der Aktivierungsknopf gedrückt werden, woraufhin ein Lichtsignal, beispielsweise in Form einer LED, aufleuchtet und somit dem Bedienpersonal eine eindeutige visuelle Rückmeldung über die erfolgreiche Aktivierung des Datenloggers gibt. Dieses Lichtsignal kann je nach Ausführungsform dauerhaft leuchten, blinken oder nach einer vorgegebenen Zeit erlöschen, um Energie zu sparen. Die Aktivierungseinrichtung stellt sicher, dass der Datenlogger erst nach bewusster Betätigung des Knopfes mit der Datenaufzeichnung beginnt, wodurch ein vorzeitiger Batterieverbrauch vermieden wird. Zudem kann der Aktivierungsknopf mit dem Lichtsignal auch für eine spätere Statusüberprüfung des Loggers verwendet werden, indem beispielsweise bei erneutem Drücken des Knopfes der aktuelle Betriebszustand durch unterschiedliche Lichtsignale angezeigt wird.

In einer alternativen bevorzugten Ausführungsform umfasst der Datenlogger einen Taster oder Schalter, der beim Einbringen des Datenloggers in die Befestigungsschiene automatisch betätigt wird und dadurch den Datenlogger aktiviert. Ein solches Betätigungselement ist vorzugsweise an der Unterseite oder seitlich, d.h. an der Mantelfläche, am Datenlogger angeordnet, sodass er beim Einsetzen in die Befestigungsschiene zwangsläufig gegen den Boden oder die Seitenwand der Nut gedrückt wird. Durch diesen Mechanismus wird sichergestellt, dass der Datenlogger unmittelbar nach seinem korrekten Einbau in die Befestigungsschiene aktiviert wird, ohne dass eine zusätzliche manuelle Aktivierung durch das Personal erforderlich ist. Dies verhindert zuverlässig Bedienfehler durch ungeschultes Personal und stellt sicher, dass kein in die Befestigungsschiene eingesetzter Datenlogger versehentlich inaktiv bleibt. Die Aktivierung kann dabei durch ein kurzes Lichtsignal bestätigt werden, das dem Bedienpersonal die erfolgreiche Aktivierung anzeigt. Zusätzlich kann der Datenlogger so konfiguriert sein, dass er sich bei einer Entnahme aus der Befestigungsschiene und der damit verbundenen Entlastung des Knopfes automatisch deaktiviert, wodurch Batterieleistung gespart und die Lebensdauer des Datenloggers verlängert wird.

Die Erfindung wird nachfolgend anhand von in der Zeichnung schematisch dargestellten Ausführungsbeispielen näher erläutert. In dieser zeigen
Fig. 1a und 1b eine perspektivische Ansicht eines Datenloggers gemäß einer ersten und zweiten Ausführungsform samt Befestigungsschiene einer Frachtpalette,
Fig. 2 einen Schnitt durch einen Verbindungsabschnitt zwischen Aufnahmekapseln entlang der in Fig. 1 dargestellten Schnittlinie A-A gemäß der ersten Ausführungsform,
Fig. 3 einen Schnitt durch eine Aufnahmekapsel entlang der in Fig. 1 dargestellten Schnittlinie B-B gemäß der ersten Ausführungsform,
Fig. 4 einen Schnitt durch einen Verbindungsabschnitt zwischen Aufnahmekapseln entlang der in Fig. 1 dargestellten Schnittlinie A-A gemäß der zweiten Ausführungsform,
Fig. 5 einen Schnitt durch eine Aufnahmekapsel entlang der in Fig. 1 dargestellten Schnittlinie B-B gemäß der zweiten Ausführungsform,
Fig. 6 eine perspektivische Ansicht eines Datenloggers gemäß einer dritten Ausführungsform,
Fig. 7 einen Schnitt durch einen Verbindungsabschnitt zwischen Aufnahmekapseln entlang der in Fig. 6 dargestellten Schnittlinie A-A gemäß der dritten Ausführungsform,
Fig. 8 einen Schnitt durch eine Aufnahmekapsel entlang der in Fig. 6 dargestellten Schnittlinie B-B gemäß der dritten Ausführungsform,
Fig. 9 eine perspektivische Ansicht eines Datenloggers gemäß einer vierten Ausführungsform,
Fig. 10 einen Schnitt durch einen Verbindungsabschnitt zwischen Aufnahmekapseln entlang der in Fig. 9 dargestellten Schnittlinie A-A gemäß der vierten Ausführungsform, und
Fig. 11 einen Schnitt durch eine Aufnahmekapsel entlang der in Fig. 9 dargestellten Schnittlinie B-B gemäß der vierten Ausführungsform.

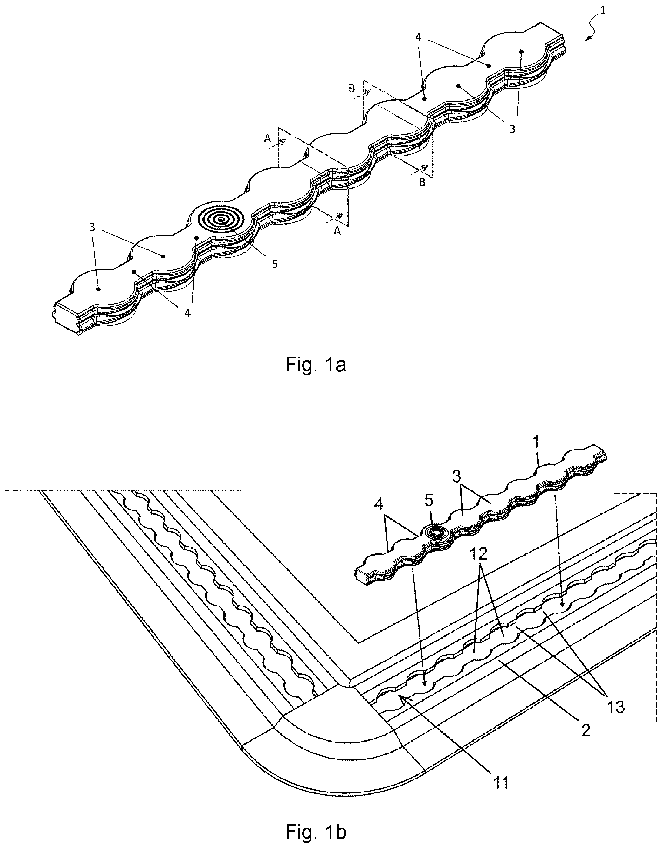

Fig. 1a zeigt eine perspektivische Gesamtansicht des Datenloggers 1 und Fig. 1b zeigt den Datenlogger 1 mit einer Befestigungsschiene **2.** Die Befestigungsschiene 2 umfasst ein langgestrecktes Profilelement mit einer durchgehenden Nut 11, entlang der eine Reihe von Vertiefungen 12 mit erweitertem Durchmesser angeordnet sind, wobei die Nut zwischen benachbarten Vertiefungen 12 jeweils einen Nutabschnitt 13 ausbildet.

Der längliche Körper des Datenloggers 1 besteht aus einer Abfolge von breiteren Aufnahmekapseln 3, die zur Aufnahme von Komponenten wie Batterien und Elektronikeinheiten dienen, und schmaleren Verbindungsabschnitten 4, die die Aufnahmekapseln 3 mechanisch verbinden. An einer der Aufnahmekapseln 3 ist ein Aktivierungsknopf 5 sichtbar. Die Linien A-A und B-B markieren die Ebenen für die Querschnittsansichten in den folgenden Figuren, wobei A-A durch einen Verbindungsabschnitt und B-B durch eine Aufnahmekapsel verläuft. Die Form ist so gestaltet, dass die Aufnahmekapseln 3 in die Vertiefungen 12 und die Verbindungsabschnitte 4 in die Nutabschnitte 13 der Befestigungsschiene 2 passen.

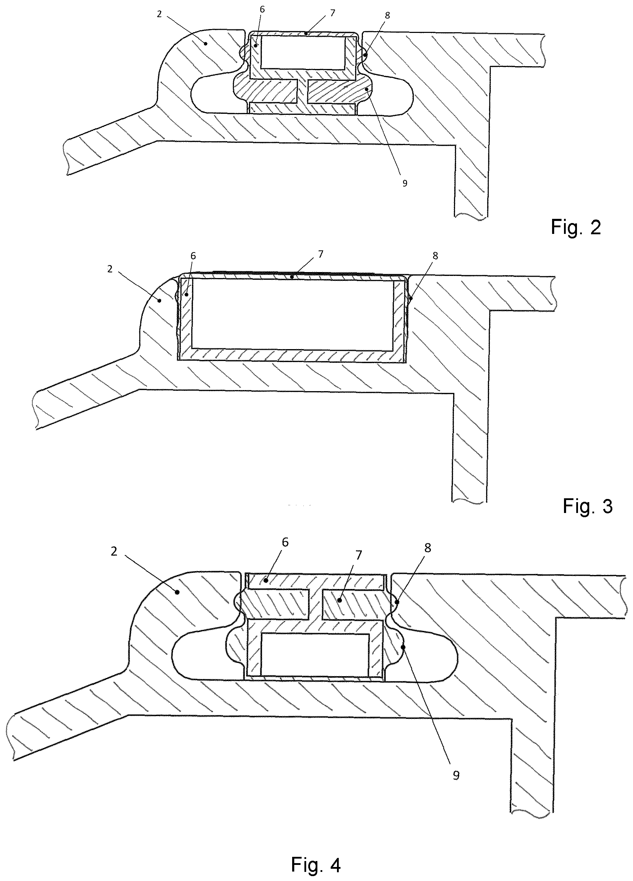

Fig. 2 zeigt einen Querschnitt durch einen Verbindungsabschnitt 4 des Datenloggers gemäß der ersten Ausführungsform (Schnitt A-A aus Fig. 1), eingesetzt in die Nut 11 der Befestigungsschiene 2. Man erkennt die formstabile Schale 6, die im oberen Bereich den Boden und die Seitenwände eines Verbindungskanals zwischen zwei benachbarten Aufnahmekapseln 3 ausbildet. Im unteren Bereich des Querschnitts weist die Schale 6 eine I-Profi-Form mit zwei parallelen Flanschen und einem diese verbindenden vertikalen Steg auf. Die Schale 6 ist von einer elastischen Umhüllung 7 umgeben. Die elastische Umhüllung 7 überdeckt und verschließt den Verbindungskanal an der Oberseite und weist zwei Wülste auf: einen oberen Wulst 8, der durch Pressung gegen die oberen Innenflächen der Nut 11 der Befestigungsschiene 2 eine reibschlüssige Verbindung herstellt, und einen unteren, seitlich überstehenden Wulst 9, der die Ränder der Nut 11 untergreift und so einen Hinterschnitt bildet, der eine formschlüssige Verbindung und Sicherung gegen unbeabsichtigtes Herausziehen bewirkt. Im Bereich des I-Profils greift die elastische Umhüllung 7 mit zwei Zungen in den Freiraum zwischen den zwei Flanschen des I-Profils ein.

Fig. 3 zeigt einen Querschnitt durch eine Aufnahmekapsel 3 des Datenloggers 1 gemäß der ersten Ausführungsform (Schnitt B-B aus Fig. 1), eingesetzt in die Vertiefung 12 der Befestigungsschiene 2. Die formstabile Schale 6 bildet hier einen größeren Hohlraum zur Aufnahme von Komponenten (z.B. Batterie oder Elektronikeinheit, nicht dargestellt). Auch hier ist die Schale 6 oben offen und von der elastischen Umhüllung 7 umgeben, sodass die Umhüllung 7 die offene Seite der Schale 6 verschleißt. Im Bereich der Aufnahmekapsel 3, die in der breiteren Vertiefung 12 der Befestigungsschiene 2 sitzt, ist primär der obere Wulst 8 für die reibschlüssige Klemmung gegen die Seitenwände der Vertiefung 12 relevant. Der formschlüssige Wulst 9 ist in diesem breiteren Bereich nicht vorhanden oder wesentlich weniger dick ausgebildet als im Bereich des Verbindungsabschnitts 4 (Fig. 2).

Fig. 4 zeigt einen Querschnitt durch einen Verbindungsabschnitt 4 gemäß der zweiten Ausführungsform (Schnitt A-A aus Fig. 1), eingesetzt in die Nut 11 der Befestigungsschiene 2. Der Aufbau ist prinzipiell ähnlich zu Fig. 2. Die formstabile Schale 6 ist von einer elastischen Umhüllung 7 umgeben, die einen reibschlüssigen Wulst 8 und einen formschlüssigen Wulst 9 zur Befestigung in der Nut 11. Der Unterschied zur ersten Ausführungsform liegt darin, dass der Datenlogger 1 in einer um 180° verdrehten Orientierung in die Nut 11 der Befestigungsschiene 2 eingesetzt ist. Der die offene Seite der formstabilen Schale 6 bzw. des Verbindungskanals verschließende Bereich der elastischen Umhüllung 7 ist hier dem Boden der Nut zugewandt.

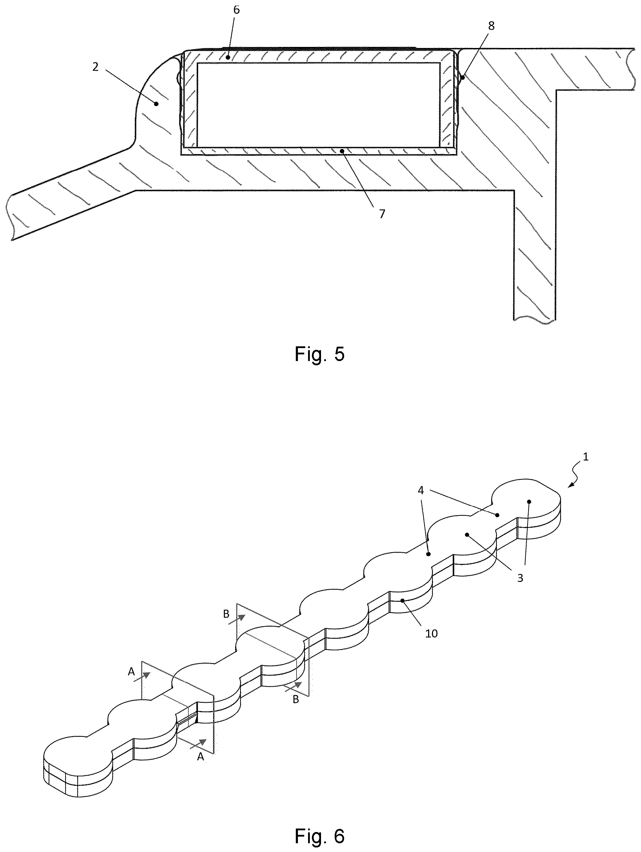

Fig. 5 zeigt einen Querschnitt durch eine Aufnahmekapsel 3 gemäß der zweiten Ausführungsform (Schnitt B-B aus Fig. 1), eingesetzt in die Vertiefung 12 der Befestigungsschiene 2. Der Aufbau ist ähnlich wie jener nach Fig. 3, mit dem Unterschied das die Orientierung um 180° verdreht ist, sodass die elastische Umhüllung 7 am Boden der Vertiefung 12 aufliegt.

Fig. 6 zeigt eine perspektivische Ansicht des Datenloggers 1 gemäß einer dritten Ausführungsform. Ähnlich wie in Fig. 1 sind Aufnahmekapseln 3 und Verbindungsabschnitte 4 zu sehen. Die formstabile Schale 6 besteht bei dieser Ausführungsform aus einem oberen und einer unteren Schalenelement, wobei die Trennebene 10 zwischen den beiden Schalenelementen mit 10 bezeichnet ist. Ein weiterer Unterschied zur ersten und zweiten ausführungsform liegt darin, dass jeweils ein elastisches Element 7 lediglich an den Verbindungsabschnitten 4 des Datenloggers angeordnet ist.

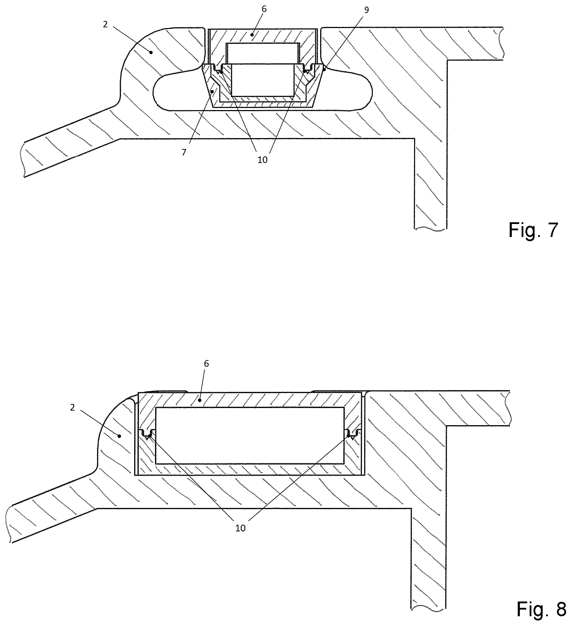

Fig. 7 zeigt einen Querschnitt durch einen Verbindungsabschnitt 4 gemäß der dritten Ausführungsform (Schnitt A-A aus Fig. 6), eingesetzt in die Nut 11 der Befestigungsschiene 2. Die Linie 10 markiert die horizontale Trennebene zwischen den beiden Hälften der Schale 6. Das elastische Element 7 umgibt lediglich das untere Schalenelement und ist derart ausgeführt, dass sich eine noch oben erweiternde Kontur ergibt, die am oberen Ende gegenüber der Schale 6 eine Stufe ausbildet. Die Stufe bildet den unteren Wulst 9 aus, der für den formschlüssigen Halt in der Nut 11 der Befestigungsschiene 2 sorgt.

Fig. 8 zeigt einen Querschnitt durch eine Aufnahmekapsel 3 gemäß der dritten Ausführungsform (Schnitt B-B aus Fig. 6), eingesetzt in die Vertiefung 12 der Befestigungsschiene 2. Man erkennt die formstabile Schale 6, die aus zwei Schalenelementen besteht, die entlang der horizontalen Linie 10 nach Art einer Nut-Feder-Verbindung formschlüssig verbunden sind. Eine äußere elastische Umhüllung ist an den Aufnahmekapseln 3 nicht vorgesehen, sodass sich ein Spalt bzw. Freiraum zwischen der Mantelfläche der Aufnahmekapsel 3 und der dieser zugewandten Innenfläche der Vertiefung 12 ergibt.

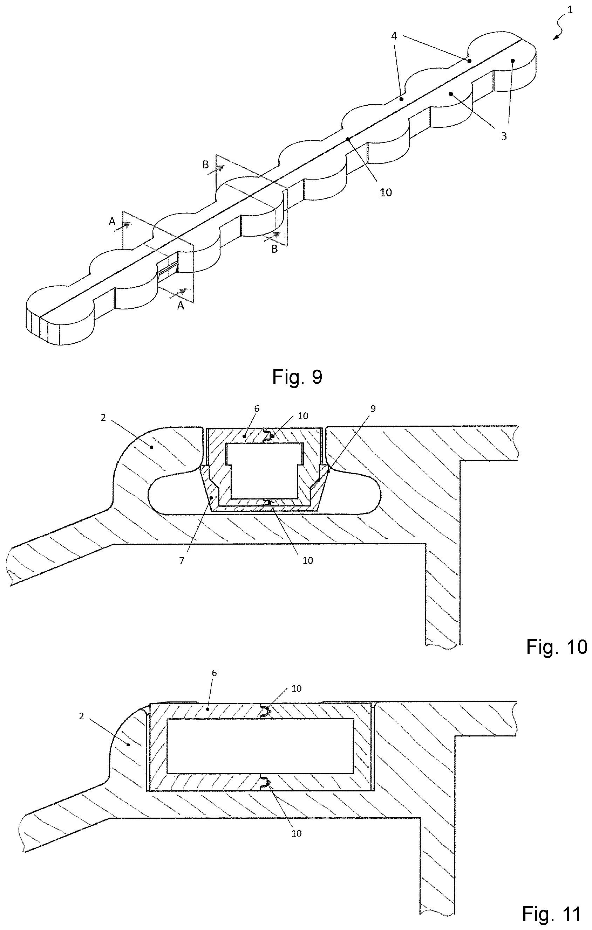

Fig. 9 zeigt eine perspektivische Ansicht des Datenloggers 1 gemäß einer vierten Ausführungsform. Die Ausführung entspricht jener der dritten Ausführungsform, mit dem Unterschied, dass die Teilungsebene 10 zwischen den zwei Schalenelementen vertikal verläuft, sodass eine linke und eine rechte Schalenhälfte ausgebildet sind.

Fig. 10 zeigt einen Querschnitt durch einen Verbindungsabschnitt 4 gemäß der vierten Ausführungsform (Schnitt A-A aus Fig. 9), eingesetzt in die Nut 11 der Befestigungsschiene 2. Es ist wieder die Linie 10 ersichtlich, welche die Trennungsebene zwischen den beiden Schalenelementen bezeichnet, wobei eine formschlüssige Nut-Feder-Verbindung vorgesehen ist zwischen den beiden Schalenelementen vorgesehen ist. Das elastische Element 7 entspricht jener der dritten Ausführungsform.

Fig. 11 zeigt einen Querschnitt durch eine Aufnahmekapsel 3 gemäß der vierten Ausführungsform (Schnitt B-B aus Fig. 9), eingesetzt in die Vertiefung 12 der Befestigungsschiene 2. Auch hier entspricht die Ausführung jeder der dritten Ausführungsform, mit Ausnahme der vertikal verlaufenden Teilungsebene 10.

## Patentansprüche

1. Datenlogger (1) zum Einsetzen in eine Befestigungsschiene (2) einer Frachtpalette, wobei die Befestigungsschiene (2) ein langgestrecktes Profilelement mit einer durchgehenden Nut (11) aufweist, entlang der eine Reihe von Vertiefungen (12) mit erweitertem Durchmesser angeordnet sind, wobei die Nut (11) zwischen benachbarten Vertiefungen (12) jeweils einen Nutabschnitt (13) ausbildet, wobei der Datenlogger (1) aufweist:
- eine Mehrzahl von Komponenten, einschließlich wenigstens einer Batterie und wenigstens einer Elektronikeinheit,
- ein Gehäuse, das
- eine Mehrzahl von Aufnahmekapseln (3) und benachbarte Aufnahmekapseln (3) jeweils verbindende Verbindungsabschnitte (4) ausbildet,
wobei in den Aufnahmekapseln (3) jeweils eine aus der Mehrzahl der Komponenten aufgenommen ist und
wobei die Aufnahmekapseln (3) in die Vertiefungen (12) der Befestigungsschiene (2) einsetzbar sind und die Verbindungsabschnitte (4) in die Nutabschnitte (13) der Befestigungsschiene (2) passen,
wobei das Gehäuse eine formstabile Schale (6) mit einer Mantelfläche und einer Bodenfläche aufweist und zumindest an der Mantelfläche wenigstens ein elastisches Element, insbesondere eine elastische Umhüllung (7) angebracht ist.

2. Datenlogger nach Anspruch 1, **dadurch gekennzeichnet, dass** das wenigstens eine elastische Element (7) eine Shore-A Härte größer als 40 aufweist.

3. Datenlogger nach Anspruch 1 oder 2, **dadurch gekennzeichnet, dass** die formstabile Schale (6) ein E-Modul größer als 3000 MPa aufweist.

4. Datenlogger nach einem der Ansprüche 1 bis 3, **dadurch gekennzeichnet, dass** die elastische Umhüllung (7) eine Stoß- oder Trennfläche (10) zwischen zwei Schalenelementen der formstabilen Schale (6) und/oder oder eine offene Seite der formstabilen Schale (6) überdeckt.

5. Datenlogger nach einem der Ansprüche 1 bis 4, **dadurch gekennzeichnet, dass** das wenigstens eine elastische Element (7) beim Eindrücken des Datenloggers (1) in die Befestigungsschiene (2) verformbar ist und einen Hinterschnitt in der Befestigungsschiene (2) bildet.

6. Datenlogger nach einem der Ansprüche 1 bis 5, **dadurch gekennzeichnet, dass** das wenigstens eine elastische Element (7) aus einem Elastomer oder thermoplastischen Elastomer (TPE) besteht.

7. Datenlogger nach einem der Ansprüche 1 bis 6, **dadurch gekennzeichnet, dass** die formstabile Schale (6) aus Polyamid oder einem faserverstärkten Kunststoff besteht.

8. Datenlogger nach einem der Ansprüche 1 bis 7, **dadurch gekennzeichnet, dass** die formstabile Schale (6) in den Verbindungsabschnitten (4) ein I-Träger-Profil aufweist.

9. Datenlogger nach einem der Ansprüche 1 bis 8, **dadurch gekennzeichnet, dass** das wenigstens eine elastische Element (7) einen Wulst (9) ausbildet, der einen Formschluss in der Nut (11) der Befestigungsschiene (2) bewirkt.

10. Datenlogger nach einem der Ansprüche 1 bis 9, **dadurch gekennzeichnet, dass** die Verbindungsabschnitte (4) jeweils einen Verbindungskanal zum Verbinden benachbarter Aufnahmekapseln (3) aufweisen, wobei die Verbindungskanäle elektrische Verbindungsleitungen zwischen den Aufnahmekapseln (3) aufnehmen.

11. Datenlogger nach einem der Ansprüche 1 bis 10, weiterhin umfassend einen Aktivierungsknopf (5) mit einem Lichtsignal zur Anzeige der Aktivierung des Datenloggers (1).

12. Datenlogger nach einem der Ansprüche 1 bis 11, **dadurch gekennzeichnet, dass** das wenigstens eine elastische Element (7) auf den Verbindungsabschnitten (4) in einer Schichtdicke von 0,2 - 2,0 mm aufgebracht ist.

13. Datenlogger nach einem der Ansprüche 1 bis 12, **dadurch gekennzeichnet, dass** die wenigstens eine Elektronikeinheit ein Sensormodul zur Erfassung von Messdaten, insbesondere von Temperatur, der geografischen Position, Luftfeuchtigkeit, Druck, Beschleunigung und/oder Erschütterungen, und ein Kommunikationsmodul zur drahtlosen Übermittlung der Messdaten aufweist, wobei das Kommunikationsmodul vorzugsweise zur Datenübermittlung über das LoRa oder LoRaWAN-Protokoll ausgebildet ist.

14. Datenlogger nach einem der Ansprüche 1 bis 13, **dadurch gekennzeichnet, dass** die formstabile Schale (6) mehrteilig, insbesondere zweiteilig, ausgeführt ist, wobei eine Teilungsebene (10) zwischen zwei Schalenelementen in Längsrichtung des Datenloggers (1) verläuft, vorzugsweise horizontal oder vertikal.

15. Frachtpalette mit einer Befestigungsschiene (2), wobei die Befestigungsschiene (2) ein langgestrecktes Profilelement mit einer durchgehenden Nut (11) aufweist, entlang der eine Reihe von Vertiefungen (12) mit erweitertem Durchmesser angeordnet sind, wobei die Nut (11) zwischen benachbarten Vertiefungen (12) jeweils einen Nutabschnitt (13) ausbildet, weiter umfassend einen Datenlogger (1) nach einem der Ansprüche 1 bis 14, dessen Aufnahmekapseln (3) in die Vertiefungen (12) der Befestigungsschiene (2) eingesetzt sind und dessen Verbindungsabschnitte (4) in die Nutabschnitte (13) der Befestigungsschiene (2) passen.
